(19) Europäisches Patentamt
European Patent Office
Office européen des brevets

(11) EP 3 783 052 A1

## (12) EUROPEAN PATENT APPLICATION
published in accordance with Art. 153(4) EPC

(43) Date of publication:
24.02.2021 Bulletin 2021/08

(21) Application number: 19788225.1

(22) Date of filing: 19.04.2019

(51) Int Cl.:
C08J 5/18 (2006.01)          B29C 48/88 (2019.01)
B32B 15/082 (2006.01)        B32B 17/10 (2006.01)
B32B 27/30 (2006.01)

(86) International application number:
PCT/JP2019/016836

(87) International publication number:
WO 2019/203349 (24.10.2019 Gazette 2019/43)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 19.04.2018 JP 2018080920

(71) Applicant: Kuraray Co., Ltd.
Kurashiki-shi, Okayama 710-0801 (JP)

(72) Inventors:
• ARISHIMA, Hiroyuki
  Kurashiki-shi, Okayama 713-8550 (JP)
• ISOUE, Koichiro
  Kurashiki-shi, Okayama 713-8550 (JP)
• YASUDA, Hirotaka
  Kurashiki-shi, Okayama 713-8550 (JP)
• IGUCHI, Toshiyuki
  Tainai-shi, Niigata 959-2691 (JP)

(74) Representative: Müller-Boré & Partner
Patentanwälte PartG mbB
Friedenheimer Brücke 21
80639 München (DE)

## (54) POLYVINYL ACETAL RESIN FILM

(57) A polyvinyl acetal resin film, having an average surface roughness Rz of at least one surface of 3.0 $\mu$m or less; a birefringence $\Delta$n of $3.0 \times 10^{-4}$ or less; and an average thickness of 200 $\mu$m or less.

EP 3 783 052 A1

**Description**

TECHNICAL FIELD

The present invention relates to a polyvinyl acetal resin film, a laminate having the polyvinyl acetal resin film between multiple transparent substrates, and the laminate which is a laminated glass.

BACKGROUND ART

As a method of removing icing and cloudiness of a glass in a building or a vehicle, a method of applying hot air to the glass is known. However, this method has a problem that it takes time to obtain sufficient forward visibility. In addition, in order to prevent malfunction of a camera or a sensor attached to a glass such as a windshield, it is necessary to heat around the camera or the sensor to remove icing and cloudiness. However, in an electric vehicle in which combustion heat of fuel cannot be used for this removal, there is a problem that the method of heating air by electricity and applying hot air to a glass is inefficient, which directly leads to a decrease in cruising distance.

Thus, a method of removing icing and cloudiness by installing a heating wire on a glass and energizing the heating wire is proposed.

For example, Patent Document 1 discloses a laminated glass containing electric wires. The laminated glass is formed by covering upper and lower sides of a functional layer with an upper adhesive layer and a lower adhesive layer, covering upper side of the upper adhesive layer with an upper glass plate, covering lower side of the lower adhesive layer with a lower glass plate, and interposing electric wires between the lower adhesive layer and the lower glass plate. Patent Document 1 specifically discloses an example using a tungsten wire as the electric wire.

In addition, for example, Patent Document 2 discloses a heating element. The heating element comprises a transparent substrate, an adhesive layer provided on at least one side of the transparent substrate, a conductive heat emitting line provided on the adhesive layer, a coating film encapsulating upper side of the conductive heat emitting line and upper side of an adhesive layer not covered by the heat emitting line, a bus bar electrically connected to the conductive heat emitting line, and a power part connected to the bus bar. Patent Document 2 specifically discloses an example using a PET (polyethylene terephthalate) film as the transparent substrate.

Furthermore, for example, Patent Document 3 discloses a method of producing a laminated glass with an electrically conductive structure, comprising bonding two transparent plates with at least one sheet A and at least one sheet B, in which the sheet A contains a polyvinyl acetal PA and a plasticizer WA, and the sheet B contains a polyvinyl acetal PB and a plasticizer WB.

PRIOR ART DOCUMENTS

PATENT DOCUMENTS

Patent Document 1: JP 2013-056811 A
Patent Document 2: JP 2013-516043 A
Patent Document 3: US 2016/288459 A1

SUMMARY OF THE INVENTION

PROBLEMS TO BE SOLVED BY THE INVENTION

However, the process of arranging a large number of tungsten wires between the glass plates and integrating the tungsten wires with the functional layer as disclosed in Patent Document 1 is complicated and inferior in productivity. In addition, since a thick tungsten wire is used, a problem of poor forward visibility occurs.

In a laminated glass using a PET film as disclosed in Patent Document 2, there are problems that two interlayer films are required and thus a heating element is located near the center of the laminated glass, which lowers glass heating efficiency, that the PET film is inferior in curved surface followability and thus cannot be applied to a windshield having high curvature, that the PET film is inferior in stretchability and thus a head impact index at the time of collision increases, and that high haze derived from an adhesive for bonding a copper foil to the PET film arises.

Patent Document 3 discloses the average surface roughness Rz in a certain range as a suitable range. However, even when the average surface roughness Rz falls within the range, there are cases where thermal shrinkage of a film is not sufficiently suppressed depending on conditions such as an amount of a plasticizer and film thickness. Examples of such a case include a case where tackiness of a surface of a polyvinyl acetal resin film containing no or only a small amount of plasticizer is low and a friction between the film and a substrate in contact with the film is small. In this case, when such a film has a large shrinkage property and a relatively large Rz even in the suitable range, thermal shrinkage of the polyvinyl acetal resin film may not be sufficiently suppressed while the film and a transparent substrate (for example, glass) are laminated, which may cause a problem such as disconnection, for example, in a case where a functional layer composed of thin heating wires is provided to the film. Therefore, a film which is unlikely to shrink due to heat is sometimes required. Furthermore, in a case where a method comprising heating for laminating a functional layer (such as a film) on a film as described above (such as thermocompression bonding) is adopted, if thermal shrinkage of the polyvinyl acetal resin film is not sufficiently suppressed, along with that, wrinkles can be likely to occur in the functional layer, and as a result, a problem of poor appearance may occur. Therefore, again, a film which is unlikely to shrink due to heat is sometimes required

A problem to be solved by the present invention is to provide a polyvinyl acetal resin film which shows shrinkage sufficiently suppressed in a step involving heating, can suppress deformation and destruction of a functional layer during heat treatment for providing the functional layer to the polyvinyl acetal resin film or during heat treatment for sandwiching the polyvinyl acetal resin film having the functional layer between transparent substrates, and can exhibit good bondability with the functional layer, and to provide a laminated glass using the film.

SOLUTIONS TO THE PROBLEMS

The present inventors intensively studied in detail in order to solve the above problem, thereby completing the present invention.

That is, the present invention includes the following preferred embodiments.

[1] A polyvinyl acetal resin film, having an average surface roughness Rz of at least one surface of 3.0 $\mu$m or less, a birefringence $\Delta$n of $3.0 \times 10^{-4}$ or less, and an average thickness of 200 $\mu$m or less.

[2] The polyvinyl acetal resin film according to the above [1], wherein a shrinkage rate in an MD direction is 7% or less when the polyvinyl acetal resin film is heated at 110°C for 30 minutes.

[3] The polyvinyl acetal resin film according to the above [1] or [2], wherein a shrinkage rate in a TD direction is 4% or less when the polyvinyl acetal resin film is heated at 110°C for 30 minutes.

[4] The polyvinyl acetal resin film according to the above [3], wherein both the shrinkage rate in the MD direction and the shrinkage rate in the TD direction are 4% or less when the polyvinyl acetal resin film is heated at 110°C for 30 minutes.

[5] The polyvinyl acetal resin film according to any one of the above [1] to [4], wherein an amount of a plasticizer in the film is 0 to 20% by mass based on a total mass of a resin composition constituting the film.

[6] The polyvinyl acetal resin film according to any one of the above [1] to [5], having a functional layer on at least one surface.

[7] The polyvinyl acetal resin film according to the above [6], wherein the functional layer is a conductive layer.

[8] The polyvinyl acetal resin film according to the above [7], wherein the conductive layer is an antenna.

[9] The polyvinyl acetal resin film according to the above [7] or [8], wherein the conductive layer comprises multiple linear conductive materials with each line width of 0.001 to 5 mm.

[10] The polyvinyl acetal resin film according to any one of the above [7] to [9], wherein the conductive layer comprises the multiple linear conductive materials with each line width of 1 to 30 $\mu$m.

[11] The polyvinyl acetal resin film according to any one of the above [7] to [10], wherein a conductive material constituting the conductive layer contains silver or copper.

[12] A laminate comprising the polyvinyl acetal resin film according to any one of the above [6] to [11] between multiple transparent substrates.

[13] The laminate according to the above [12], further comprising a plasticized polyvinyl acetal resin layer between the multiple transparent substrates.

[14] The laminate according to the above [12] or [13], wherein the transparent substrate is glass.

[15] The laminate according to the above [14], which is a laminated glass for a vehicle.

[16] A method of producing the polyvinyl acetal resin film according to any one of the above [1] to [5], comprising melt-extruding a resin composition constituting the film in a condition in which a speed ratio [(VI - V3)/V1] between a speed (V1) of a cooling roll that cools a film temperature from a temperature of more than 80°C to a temperature of 80°C or less and a speed (V3) of a winding roll, or, when the film temperature is reduced from a temperature of more than 80°C to a temperature of 80°C or less between rolls, a speed ratio [(V2 - V3)/V2] between a speed (V2) of a roll arranged immediately before the reduction and the speed (V3) of the winding roll is in a range of 0 or more and less than 0.1.

[17] A method of producing the polyvinyl acetal resin film according to any one of the above [6] to [11], further comprising coating, printing or laminating a material constituting the functional layer on at least one surface of the film.

EFFECTS OF THE INVENTION

The polyvinyl acetal resin film of the present invention shows shrinkage sufficiently suppressed in a step involving heating, can suppress deformation and destruction of the functional layer during heat treatment for providing the functional layer to the polyvinyl acetal resin film or during heat treatment for sandwiching the polyvinyl acetal resin film having the functional layer between the transparent substrates, and can exhibit good bondability with the functional layer.

BRIEF DESCRIPTION OF THE DRAWINGS

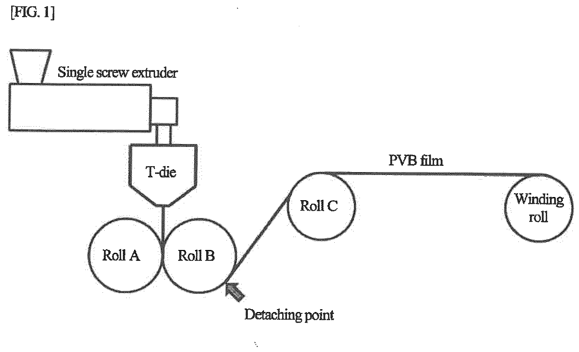

Fig. 1 is a schematic view of an apparatus used for forming a polyvinyl acetal resin film.

EMBODIMENTS OF THE INVENTION

In a polyvinyl acetal resin film of the present invention, an average surface roughness Rz of at least one surface is 3.0 $\mu$m or less, a birefringence $\Delta$n is 3.0 $\times$ 10$^{-4}$ or less, and an average thickness is 200 $\mu$m or less.

The average surface roughness Rz of at least one surface of the polyvinyl acetal resin film is 3.0 $\mu$m or less. If this value is more than 3.0 $\mu$m, thermal shrinkage of the polyvinyl acetal resin film cannot be sufficiently suppressed, deformation and destruction of a functional layer cannot be suppressed during heat treatment for providing the functional layer to the polyvinyl acetal resin film or during heat treatment for sandwiching the polyvinyl acetal resin film having the functional layer between transparent substrates, and good bondability between the polyvinyl acetal resin film and the functional layer cannot be obtained. The average surface roughness Rz of at least one surface of the polyvinyl acetal resin film is preferably 2.5 $\mu$m or less, and more preferably 2.0 $\mu$m or less. When this value is equal to or less than the above upper limit value, thermal shrinkage of the polyvinyl acetal resin film can be further suppressed, deformation and destruction of the functional layer can be further suppressed during the above heat treatments, and good bondability between the polyvinyl acetal resin film and the functional layer can be more easily obtained.

From the viewpoint of further suppressing the thermal shrinkage of the polyvinyl acetal resin film and further suppressing deformation and destruction of the functional layer during the above heat treatments, the average surface roughness Rz of both surfaces of the polyvinyl acetal resin film is preferably equal to or less than the above upper limit value. For example, in a case where the functional layer is provided on each surface of the polyvinyl acetal resin film, the thermal shrinkage of the polyvinyl acetal resin film can be more likely to affect deformation of the functional layer. However, when the average surface roughness Rz of both surfaces of the polyvinyl acetal resin film is equal to or less than the above upper limit value, the thermal shrinkage of the polyvinyl acetal resin film can be further suppressed, which is preferable.

The average surface roughness Rz can be measured according to JIS B0601-1994. The lower limit value of the average surface roughness Rz is not particularly limited. The average surface roughness Rz is usually 0.01 $\mu$m or more.

The average surface roughness Rz of at least one surface of the polyvinyl acetal resin film can be adjusted to equal to or less than the above upper limit value, for example, by using a cooling roll having a suitable surface shape or surface material when the polyvinyl acetal resin film is formed using an extruder or by controlling a time or a nip pressure during contact between the polyvinyl acetal resin film and the cooling roll, or the temperature of the polyvinyl acetal resin film from melt-extruding to winding.

The polyvinyl acetal resin film of the present invention also has a birefringence $\Delta$n of 3.0 $\times$ 10$^{-4}$ or less. If this value is more than 3.0 $\times$ 10$^{-4}$, thermal shrinkage of the polyvinyl acetal resin film is not sufficiently suppressed, deformation and destruction of a functional layer cannot be suppressed during heat treatment for providing the functional layer to the polyvinyl acetal resin film or during heat treatment for sandwiching the polyvinyl acetal resin film having the functional layer between transparent substrates, and good bondability between the polyvinyl acetal resin film and the functional layer cannot be obtained. The birefringence $\Delta$n of the polyvinyl acetal resin film is preferably 2.0 $\times$ 10$^{-4}$ or less. When this value is equal to or less than the above upper limit value, thermal shrinkage of the polyvinyl acetal resin film can be further suppressed, deformation and destruction of the functional layer can be further suppressed during the above heat treatments, and good bondability between the polyvinyl acetal resin film and the functional layer can be more easily obtained.

The birefringence $\Delta$n can be used as an index for grasping stress inside the polyvinyl acetal resin film, and can be measured by the method described in the Examples mentioned below. The lower limit value of the birefringence $\Delta$n is not particularly limited. The birefringence $\Delta$n is usually 1.0 $\times$ 10$^{-5}$ or more.

The birefringence $\Delta$n of the polyvinyl acetal resin film can be adjusted to equal to or less than the above upper limit value, for example, by adjusting the average surface roughness Rz to an appropriate small value, by adjusting the polyvinyl acetal resin film temperature on the cooling roll after melt extrusion when the polyvinyl acetal resin film is formed using an extruder, by adjusting a speed ratio between a drive roll (which may be a cooling roll) and a winding roll as described later and performing control so that tension applied to the polyvinyl acetal resin film does not become too large, or by performing heat treatment without tension at 30 to 70°C for stress relaxation of the polyvinyl acetal resin film after cooling. More specifically, the birefringence $\Delta n$ of the polyvinyl acetal resin film can be adjusted to equal to or less than the above upper limit value by adjusting the cooling roll temperature and the time during contact between the polyvinyl acetal resin film and the cooling roll so that a temperature at a detaching point of the polyvinyl acetal resin film from the drive roll immediately after melt extrusion is higher than a glass transition temperature of a resin constituting the polyvinyl acetal resin film, and setting the speed ratio between the drive roll and the winding roll to be substantially zero.

In a case where the polyvinyl acetal resin film has a thin average thickness of 200 $\mu$m or less, particularly 100 $\mu$m or less, shrinkage of the polyvinyl acetal resin film can be likely to occur particularly during the above heat treatments. Therefore, it is preferable that the average surface roughness Rz is 2.5 $\mu$m or less of at least one surface of the polyvinyl acetal resin film and the birefringence $\Delta n$ is $2.0 \times 10^{-4}$ or less, and it is more preferable that the average surface roughness Rz is 2.0 $\mu$m or less of at least one surface of the polyvinyl acetal resin film and the birefringence $\Delta n$ is $2.0 \times 10^{-4}$ or less. For the same reason, on both surfaces of the polyvinyl acetal resin film, it is preferable that the average surface roughness Rz is 3.0 $\mu$m or less and the birefringence $\Delta n$ is $3.0 \times 10^{-4}$ or less, it is more preferable that the average surface roughness Rz is 2.5 $\mu$m or less and the birefringence $\Delta n$ is $2.0 \times 10^{-4}$ or less, and it is particularly preferable that the average surface roughness Rz is 2.0 $\mu$m or less and the birefringence $\Delta n$ is $2.0 \times 10^{-4}$ or less.

Although an action mechanism by which the average surface roughness Rz affects thermal shrinkage of the polyvinyl acetal resin film is not clear, the following action mechanism is presumed. The polyvinyl acetal resin film surface is shaped by the cooling roll so that the average surface roughness Rz becomes smaller than a specific value, whereby residual stress in a minute region that is not detected as the birefringence $\Delta n$ measured in a relatively large area develops near the polyvinyl acetal resin film surface. Particularly in a thin polyvinyl acetal resin film, a ratio of a thickness near the surface to a film thickness increases. Thus, an influence of such residual stress on film properties (including thermal shrinkage) becomes relatively large. Therefore, it is presumed that thermal shrinkage of the polyvinyl acetal resin film can be significantly suppressed when the average surface roughness Rz is smaller than a specific value. However, it is clearly stated here that the polyvinyl acetal resin film is within the scope of the present invention even if a reason (action mechanism) why the polyvinyl acetal resin film of the present invention is excellent in the above effects is different from the above reason.

The polyvinyl acetal resin film of the present invention also has an average thickness of 200 $\mu$m. When the average thickness of the polyvinyl acetal resin film is more than 200 $\mu$m, there arises a problem that in a case where a plasticized polyvinyl acetal resin layer is laminated, due to the fact that an amount of the plasticizer to be transferred from the plasticized polyvinyl acetal resin layer to the polyvinyl acetal resin film increases and the amount of the plasticizer in the plasticized polyvinyl acetal resin layer decreases, head impact increases when a vehicle mounted with a laminated glass for a vehicle using the polyvinyl acetal resin film collides. The average thickness of the polyvinyl acetal resin film is preferably 150 $\mu$m or less, and more preferably 75 $\mu$m or less. When the average thickness of the polyvinyl acetal resin film is equal to or less than the above upper limit value, thermal shrinkage of the polyvinyl acetal resin film can be further suppressed, and deformation and destruction of the functional layer can be further suppressed during the above heat treatments, so that the above problem is unlikely to occur.

The polyvinyl acetal resin film of the present invention preferably has an average thickness of 20 to 200 $\mu$m, and more preferably 30 to 100 $\mu$m. When the average thickness of the polyvinyl acetal resin film is within the above range, thermal shrinkage of the polyvinyl acetal resin film can be more easily suppressed, deformation and destruction of the functional layer can be more easily suppressed during the above heat treatments, the above problem such as increase in head impact is unlikely to occur, and good film forming properties can be more easily obtained.

The thickness of the polyvinyl acetal resin film can be measured with a thickness meter, a laser microscope or the like.

In a preferred embodiment, the polyvinyl acetal resin film of the present invention has a shrinkage rate in an MD direction (machine direction) of 7% or less, preferably 4% or less when heated at 110°C for 30 minutes.

In a preferred embodiment, the polyvinyl acetal resin film of the present invention has a shrinkage rate in a TD direction (direction on a polyvinyl acetal resin film surface perpendicular to the machine direction) of 4% or less, preferably 3% or less when heated at 110°C for 30 minutes.

In a preferred embodiment, the polyvinyl acetal resin film of the present invention has a shrinkage rate in both the MD direction and the TD direction of 4% or less, preferably 3.5% or less when heated at 110°C for 30 minutes.

When the shrinkage rate of the polyvinyl acetal resin film is equal to or less than the above upper limit value, deformation and destruction of the functional layer can be further suppressed during the above heat treatments, and better bondability between the polyvinyl acetal resin film and the functional layer can be more easily obtained. The shrinkage rate of the polyvinyl acetal resin film can be measured by the method described in the Examples mentioned below. The temperature of 110°C reflects a general temperature during thermocompression bonding of the polyvinyl acetal resin film and the functional layer (copper foil in the Examples). The shrinkage rate of the polyvinyl acetal resin film can be adjusted to equal to or less than the above upper limit value, for example, by adjusting the average surface roughness Rz, the birefringence Δn and the average thickness to be equal to or less than the predetermined upper limit values, or by using a polyvinyl acetal resin having a large viscosity average polymerization degree.

<Resin constituting polyvinyl acetal resin film>

As the resin constituting the polyvinyl acetal resin film of the present invention, a polyvinyl acetal resin produced by acetalization of a polyvinyl alcohol-based resin, such as polyvinyl alcohol or ethylene vinyl alcohol copolymer, can be used.

The polyvinyl acetal resin may be constituted of one polyvinyl acetal resin or two or more polyvinyl acetal resins which differ from each other in any one or more of a viscosity average polymerization degree, an acetalization degree, an amount of vinyl acetate units, an amount of vinyl alcohol units, an amount of ethylene units, a molecular weight of aldehyde used for acetalization, and a chain length. In a case where the polyvinyl acetal resin is constituted of two or more different polyvinyl acetal resins, from the viewpoint of ease of melt molding and from the viewpoint of preventing deformation of the functional layer at the time of producing a laminate and misalignment of a glass at the time of using the laminate, the polyvinyl acetal resin is preferably a mixture of two or more polyvinyl acetal resins having different viscosity average polymerization degrees, or an acetalized product of a mixture of at least two polyvinyl alcohol-based resins having different viscosity average polymerization degrees.

The polyvinyl acetal resin can be produced, for example, by the following method, but the production method of the polyvinyl acetal resin is not limited thereto. First, an aqueous solution of polyvinyl alcohol or ethylene vinyl alcohol copolymer having a concentration of 3 to 30% by mass is maintained in a temperature range of 80 to 100°C, and then gradually cooled over 10 to 60 minutes. When the temperature drops to -10 to 30°C, an aldehyde and an acid catalyst are added, and the acetalization reaction is carried out for 30 to 300 minutes while keeping the temperature constant. Next, the temperature of the reaction solution is raised to a temperature of 20 to 80°C over 30 to 200 minutes, and held for 30 to 300 minutes. Subsequently, the reaction solution is filtered if necessary, and then neutralized by adding a neutralizing agent such as alkali, and the resin is filtered, washed with water and dried to produce a polyvinyl acetal resin.

The acid catalyst used for the acetalization reaction is not particularly limited, and organic and inorganic acids such as acetic acid, para-toluenesulfonic acid, nitric acid, sulfuric acid, and hydrochloric acid can be used. Among these acid catalysts, hydrochloric acid, sulfinic acid and nitric acid are preferable from the viewpoint of acid strength and ease of removal by the washing.

The polyvinyl acetal resin is preferably one obtained by acetalizing at least one polyvinyl alcohol-based resin with one or more aldehyde or keto compound having 2 to 10 carbon atoms. Examples of the polyvinyl alcohol-based resin include polyvinyl alcohol and ethylene vinyl alcohol copolymer, and polyvinyl alcohol is preferable. The aldehyde or keto compound may be a linear, branched or cyclic compound and is preferably a linear or branched compound, more preferably linear aliphatic aldehyde, and particularly preferably n-butyraldehyde. In the above embodiment, the polyvinyl acetal resin tends to have a suitable breaking energy. The polyvinyl acetal resin may be a product acetalized with a mixture of multiple aldehydes or keto compounds. The content of n-butyraldehyde in the mixture is preferably 50% by mass or more, more preferably 80% by mass or more, still more preferably 95% by mass or more, and particularly preferably 99% by mass or more. The polyvinyl acetal resin may be a product acetalized with 100% by mass of n-butyraldehyde.

The polyvinyl alcohol-based resin used for producing the polyvinyl acetal resin may be a single resin or a mixture of two or more polyvinyl alcohol-based resins having different viscosity average polymerization degrees, degrees of hydrolysis, or the like. The viscosity average polymerization degree of the polyvinyl alcohol-based resin is preferably 100 or more, more preferably 300 or more, more preferably 400 or more, still more preferably 600 or more, particularly preferably 700 or more, and most preferably 750 or more. When the viscosity average polymerization degree is equal to or more than the above lower limit value, thermal shrinkage of the polyvinyl acetal resin film can be further suppressed, deformation and destruction of the functional layer can be further suppressed during the heat treatments described above, and better bondability between the polyvinyl acetal resin film and the functional layer can be more easily obtained. The viscosity average polymerization degree is preferably 5000 or less, more preferably 3000 or less, still more preferably 2500 or less, particularly preferably 2300 or less, and most preferably 2000 or less. When the viscosity average polymerization degree is equal to or less than the above upper limit value, good film forming properties can be more easily obtained. The viscosity average polymerization degree can be measured based on JIS K 6726 "Polyvinyl alcohol test method". In a case where the polyvinyl alcohol-based resin is prepared from two or more different polyvinyl acetal resins, the viscosity average polymerization degree of at least one polyvinyl alcohol-based resin is preferably in the range from the above lower limit value to the above upper limit value.

From the viewpoint of an acetyl group amount in the polyvinyl acetal resin, when a repeat unit is assumed to be a unit comprising two carbon atoms of the main chain in the polyvinyl alcohol-based resin which is a raw material for producing the polyvinyl acetal resin (for example, a vinyl alcohol unit, a vinyl acetate unit, and an ethylene unit), the content of vinyl acetate units is preferably 0.1 to 20 mol%, more preferably 0.5 to 8 mol%, and still more preferably 0.5 to 3 mol% or 5 to 8 mol%, based on the repeat units. The content of the vinyl acetate units can be adjusted by appropriately adjusting a saponification degree of the polyvinyl alcohol-based resin of the raw material. When the content of the vinyl acetate units is within the above range, the plasticizer compatibility and mechanical strength of the polyvinyl acetal resin film tend to be excellent. In addition, in a case where the plasticized polyvinyl acetal resin layer is laminated, good bondability between the plasticized polyvinyl acetal resin layer and the polyvinyl acetal resin film can be obtained, and reduction of optical distortion and the like can be more easily achieved. In a case where the resin constituting the polyvinyl acetal resin film contains two or more different polyvinyl acetal resins, the average content of the vinyl acetate units of the polyvinyl acetal resins is preferably within the above range.

The acetalization degree of the polyvinyl acetal resin is not particularly limited. Assuming that a repeat unit is the unit comprising two carbon atoms of the main chain in the polyvinyl alcohol-based resin which is a raw material for producing the polyvinyl acetal resin (for example, a vinyl alcohol unit, a vinyl acetate unit, and an ethylene unit), the acetalization degree is an amount of acetal-forming repeat units on the basis of the repeat units in the polyvinyl alcohol-based resin. The acetalization degree is preferably 40 to 86 mol%, more preferably 45 to 84 mol%, still more preferably 50 to 82 mol%, particularly preferably 60 to 82 mol%, and most preferably 68 to 82 mol%. By appropriately adjusting the amount of aldehyde used in the acetalization reaction, the acetalization degree can be adjusted within the above range. When the acetalization degree is within the above range, the sufficient mechanical strength of the polyvinyl acetal resin film of the present invention can be more easily achieved, and the compatibility between the polyvinyl acetal resin and the plasticizer is unlikely to be reduced. In a case where the polyvinyl acetal resin film contains two or more different polyvinyl acetal resins, the acetalization degree of at least one polyvinyl acetal resin is preferably within the above range.

From the viewpoint of a hydroxyl group amount in the polyvinyl acetal resin, when a repeat unit is assumed to be a unit comprising two carbon atoms of the main chain in the polyvinyl alcohol-based resin which is a raw material for producing the polyvinyl acetal resin (for example, a vinyl alcohol unit, a vinyl acetate unit, and an ethylene unit), the content of the vinyl alcohol units is preferably 16 to 34 mol%, more preferably 18 to 34 mol%, more preferably 22 to 34 mol%, and particularly preferably 26 to 34 mol%, based on the repeat units in the polyvinyl alcohol-based resin. On the other hand, in order to additionally impart sound insulation performance, the content of the vinyl alcohol units is preferably 9 to 29 mol%, more preferably 12 to 26 mol%, still more preferably 15 to 23 mol%, and particularly preferably 16 to 20 mol%. By adjusting the amount of aldehyde used in the acetalization reaction, the content of the vinyl alcohol units can be adjusted within the above range. When the content of the vinyl alcohol units is within the above range, in a case where the plasticized polyvinyl acetal resin layer is laminated, a difference in refractive index between the plasticized polyvinyl acetal resin layer and the polyvinyl acetal resin film can be reduced and a laminate with little optical unevenness can be more easily obtained. In a case where the polyvinyl acetal resin film contains two or more different polyvinyl acetal resins, the content of the vinyl alcohol units of at least one polyvinyl acetal resin is preferably within the above range.

The polyvinyl acetal resin is generally constituted of an acetal-fomring unit, a vinyl alcohol unit, and a vinyl acetate unit, and these respective units can be measured by the "Testing Methods for Polyvinyl Butyral" of JIS K 6728 or a nuclear magnetic resonance method (NMR).

The viscosity of a 10% by mass solution of the polyvinyl acetal resin in toluene/ethanol = 1/1 (by mass ratio) as measured at 30 rpm and 20°C by using a Brookfield-type (B-type) viscometer is preferably more than 120 mPa·s, more preferably more than 150 mPa·s, and particularly preferably more than 200 mPa·s. When the viscosity of the polyvinyl acetal resin is equal to or more than the above lower limit value, it is easier to further suppress deformation and disconnection of the functional layer or the conductive layer when the laminate is produced and to suppress misalignment of a glass of the obtained laminate under high temperature conditions. The viscosity can be adjusted to equal to or more than the lower limit value by using a polyvinyl alcohol-based resin having a high viscosity average polymerization degree as at least a part of the raw material. In a case where the above polyvinyl acetal resin is composed of a mixture of two or more different polyvinyl acetal resins, the viscosity of the mixture is preferably equal to or more than the lower limit value. The upper limit value of the viscosity is usually 1000 mPa·s, preferably 800 mPa·s, more preferably 500 mPa·s, still more preferably 450 mPa·s, and particularly preferably 400 mPa·s from the viewpoint of more easily obtaining good film forming properties.

A peak top molecular weight of the polyvinyl acetal resin is preferably 100,000 to 200,000, more preferably 110,000 to 160,000, and particularly preferably 111,000 to 150,000. The peak top molecular weight can be adjusted to within the above range by using a polyvinyl alcohol-based resin having a high viscosity average polymerization degree as at least a part of the raw material. When the peak top molecular weight is within the above range, suitable film forming properties and suitable film physical properties (for example, laminate suitability, creep resistance and breaking strength) can be more easily obtained.

Molecular weight distribution of the polyvinyl acetal resin, that is, a ratio (Mw/Mn) of weight average molecular weight (Mw) to number average molecular weight (Mn) is preferably 22 or more, more preferably 2.3 or more, and particularly preferably 2.4 or more. The molecular weight distribution can be adjusted to equal to or more than the lower limit value by acetalizing a mixture of polyvinyl alcohol-based resins having different viscosity average polymerization degrees or mixing polyvinyl acetal resins having different viscosity average polymerization degrees. When the molecular weight distribution is equal to or more than the lower limit value, both film forming properties and suitable film physical properties (for example, laminate suitability, creep resistance and breaking strength) can be more easily realized. The upper limit value of the molecular weight distribution is not particularly limited. From the viewpoint of ease of film formation, the molecular weight distribution is usually 10 or less and preferably 5 or less.

In a case where the resin constituting the polyvinyl acetal resin film contains two or more different polyvinyl acetal resins, the peak top molecular weight and the molecular weight distribution of the contained polyvinyl acetal resin mixture are preferably within the above range.

The peak top molecular weight and molecular weight distribution can be determined by using gel permeation chromatography with polystyrene of known molecular weight as a standard.

The polyvinyl acetal resin film preferably contains an uncrosslinked polyvinyl acetal resin from the viewpoint of more easily obtaining good film forming properties, and may contain a cross-linked polyvinyl acetal. Methods for crosslinking polyvinyl acetals are described, for example, in EP 1527107 B1 and WO 2004/063231 A1 (thermal self-crosslinking of polyvinyl acetals containing carboxyl groups), EP 1606325 A1 (polyvinyl acetals cross-linked with polyaldehydes) and WO 2003/020776 A1 (polyvinyl acetal cross-linked with glyoxylic acid). In addition, a method is also useful in which acetalization reaction conditions are appropriately adjusted to control an intermolecular acetal bonding amount to be generated or to control a degree of blocking of a remaining hydroxyl group.

<Plasticizer>

In the present invention, the amount of the plasticizer in the polyvinyl acetal resin film is preferably 0 to 20% by mass, more preferably 0 to 19% by mass, still more preferably 0 to 15% by mass, even more preferably 0 to 10% by mass, and particularly preferably 0 to 5% by mass, based on the total mass of the resin composition constituting the polyvinyl acetal resin film. When the amount of plasticizer in the polyvinyl acetal resin film is within the above range, a polyvinyl acetal resin film excellent in film forming properties and handleability can be more easily produced, and the deformation and disconnection of the functional layer or the conductive layer can be more easily suppressed when a laminate having the polyvinyl acetal resin film is produced.

When the polyvinyl acetal resin film contains the plasticizer, one or more compounds of the following group are preferably used as the plasticizer.

- Esters of polyvalent aliphatic or aromatic acids. Examples thereof include dialkyl adipates (e.g. dihexyl adipate, di-2-ethylbutyl adipate, dioctyl adipate, di-2-ethyl hexyl adipate, hexyl cyclohexyl adipate, heptyl adipate, nonyl adipate, diisononyl adipate, and heptyl nonyl adipate); esters of adipic acid with alcohol or alcohol containing an ether compound (e.g. di(butoxyethyl)adipate, di(butoxyethoxyethyl)adipate); dialkyl sebacates (e.g. dibutyl sebacate); esters of sebacic acid with alcohol containing an alicyclic or ether compound; esters of phthalic acid (e.g. butyl benzyl phthalate and bis-2-butoxyethyl phthalate); and esters of alicyclic polyhydric carboxylic acid with aliphatic alcohol (e.g. 1,2-cyclohexane dicarboxylic acid diisononyl esters).
- Esters or ethers of polyvalent aliphatic or aromatic alcohols or oligoether glycols with one or more aliphatic or aromatic substituents. Examples thereof include esters of glycerin, diglycol, triglycol, tetraglycol and the like with a linear or branched, aliphatic or alicyclic carboxylic acid. Specific examples thereof include ether ester-based compounds such as diethylene glycol-bis-(2-ethylhexanoate), triethylene glycol-bis-(2-ethylhexanoate) (3GO), triethylene glycol-bis-(2-ethylbutanoate), tetraethylene glycol-bis-(2-ethylhexanoate), tetraethylene glycol-bis-n-heptanoate, triethylene glycol-bis-n-heptanoate, triethylene glycol-bis-n-hexanoate, and dipropylene glycol benzoate, and tetraethylene glycol dimethyl ether.
- Phosphate esters of aliphatic or aromatic alcohols. Examples thereof include tris(2-ethylhexyl)phosphate, triethylphosphate, diphenyl-2-ethylhexyl phosphate, and tricresyl phosphate.
- Esters of citric acid, succinic acid, and/or fumaric acid
- Ethylene oxide and/or propylene oxide adduct of bisphenol A.

A polyester or an oligoester composed of a polyhydric alcohol and a polyvalent carboxylic acid, a terminal esterified product or etherified product thereof, a polyester or an oligoester composed of lactone or hydroxycarboxylic acid, or a terminal esterified product or etherified product thereof may be used as a plasticizer.

In a case where the polyvinyl acetal resin film contains a plasticizer and the plasticized polyvinyl acetal resin layer is laminated, from the viewpoint of suppressing problems (for example, problems such as a change in physical properties with time) associated with transfer of the plasticizer between the polyvinyl acetal resin film and the plasticized polyvinyl acetal resin layer to be laminated, it is preferable that the plasticizer contained in the polyvinyl acetal resin film is the same as the plasticizer contained in the plasticized polyvinyl acetal resin layer, or it is preferable to use a plasticizer which does not impair physical properties (for example, heat resistance, light resistance, transparency, and plasticization effect) of the polyvinyl acetal resin film and the plasticized polyvinyl acetal resin layer. From such a viewpoint, as plasticizers, ether ester-based compounds are preferable, triethylene glycol-bis-(2-ethylhexanoate) (3GO), triethylene glycol-bis(2-ethylbutanoate), tetraethylene glycol-bis-(2-ethylhexanoate), and tetraethylene glycol-bisheptanoate are more preferable, and triethylene glycol-bis-(2-ethylhexanoate) is particularly preferable.

<Additive>

The polyvinyl acetal resin film may further contain another additive. Examples of such an additive include water, ultraviolet absorbers, antioxidants, adhesion regulators, brighteners or fluorescent brighteners, stabilizers, dyes, processing aids, organic or inorganic nanoparticles, calcined silicic acid, and surfactants.

In an embodiment in which the polyvinyl acetal resin film has a conductive layer as a functional layer, in order to suppress corrosion of the conductive layer, it is preferable that the polyvinyl acetal resin film contains a corrosion inhibitor. The amount of the corrosion inhibitor contained in the polyvinyl acetal resin film is preferably 0.005 to 5% by mass based on the mass of the polyvinyl acetal resin film. Examples of the corrosion inhibitor include substituted or unsubstituted benzotriazoles.

<Method of producing polyvinyl acetal resin film>

The method of producing a polyvinyl acetal resin film is not particularly limited. It is possible to produce a polyvinyl acetal resin film by blending the polyvinyl acetal resin, optionally a predetermined amount of a plasticizer, and other additives if necessary, uniformly kneading the mixture, and then forming a sheet (film) by a well-known film forming method such as an extrusion method, a calender method, a pressing method, a casting method and an inflation method.

Among the well-known film forming methods, a method to produce a sheet (film) using an extruder is especially suitably employed. The resin temperature during extrusion is preferably 150 to 250°C, and more preferably 170 to 230°C. When the resin temperature is too high, a polyvinyl acetal resin will decompose, and the content of volatile substances increases. When the temperature is too low, the content of volatile substances increases as well. In order to efficiently remove the volatile substances, it is preferable to remove the volatile substances from a vent port of the extruder by reducing the pressure. In a case where a polyvinyl acetal resin film is formed using an extruder, a film may be melt-extruded on a metal foil as mentioned later.

From the viewpoint of more easily obtaining the desired average surface roughness Rz, birefringence $\Delta$n and average thickness, as at least one cooling roll immediately after melt extrusion which is used when a polyvinyl acetal resin film is formed using an extruder, it is preferable to use a cooling roll having a suitable surface shape or surface material, for example, a metal elastic roll, and among them, it is preferable to use a metal elastic roll plated with hard chrome. From the same point of view, the temperature of the polyvinyl acetal resin film at a detaching point from the drive roll immediately after melt extrusion is preferably higher than a glass transition temperature of the resin constituting the polyvinyl acetal resin film, and the polyvinyl acetal resin film temperature at the detaching point is preferably 80°C or more and more preferably 83°C or more. In a case where the polyvinyl acetal resin constituting the polyvinyl acetal resin film contains two or more different polyvinyl acetal resins, the polyvinyl acetal resin film temperature at the detaching point is preferably higher than the glass transition temperature of at least one polyvinyl acetal resin. On the other hand, when the polyvinyl acetal resin film temperature at the detaching point is too high, deformation due to deflection caused by its own weight may occur depending on the process, and problems such as self-adhesion of the film due to insufficient cooling during winding may occur. Therefore, the temperature of the polyvinyl acetal resin film at the detaching point is preferably less than 100°C. Further, from the same point of view, it is preferable to control so that tension applied to the polyvinyl acetal resin film whose temperature has dropped to around the glass transition temperature does not become too large. For example, it is preferable to control a speed ratio [(V1 - V3)/V1] between a speed (V1) of the cooling roll that cools the film temperature from a temperature of more than 80°C to a temperature of 80°C or less and a speed (V3) of the winding roll. In a case where the film temperature is reduced from a temperature of more than 80°C to a temperature of 80°C or less between rolls (for example, between a roll B and a roll C in Fig. 1), it is preferable to control a speed ratio [(V2 - V3)/V2] between a speed (V2) of a roll arranged immediately before the reduction and the speed (V3) of the winding roll. When the tension is too high, the residual stress of the polyvinyl acetal resin film increases, and the polyvinyl acetal resin film can be likely to undergo thermal shrinkage in a step involving heating. The speed ratio is preferably 0 to 0.1, more preferably 0 to less than 0.1, and particularly preferably 0 to 0.05. Furthermore, from the same point of view, it is preferable to relax the stress of the polyvinyl acetal resin film after cooling, and examples of the method include a method of heat treatment at 30 to 70°C without applying tension.

<Functional layer>

The polyvinyl acetal resin film of the present invention preferably has a functional layer on at least one surface. The functional layer is a layer which provides a specific function to a laminate. One or more functional layers may be provided. In a case where the polyvinyl acetal resin film has multiple functional layers, the types of respective functional layers may be the same or different.

In a surface having the functional layer of the polyvinyl acetal resin film, the polyvinyl acetal resin film may have the functional layer on the entirety of the surface, or may have the functional layer on part of the surface. In a case where a plasticized polyvinyl acetal resin layer as described later is laminated on the polyvinyl acetal resin film to produce a laminate, it is preferable that the polyvinyl acetal resin film have a functional layer on part of the surface so that the plasticizer in the plasticized polyvinyl acetal resin layer can transfer to the polyvinyl acetal resin film. However, in a case where the functional layer does not inhibit the transfer of the plasticizer from the plasticized polyvinyl acetal resin layer to the polyvinyl acetal resin film, having the functional layer on part of the surface of the polyvinyl acetal resin film is not necessarily considered.

The functional layer is preferably one or more selected from the group consisting of a conductive layer, a specific wavelength electromagnetic wave reflection layer such as an infrared reflection layer or an ultraviolet reflection layer, a color correction layer, an infrared absorption layer, an ultraviolet absorption layer, a fluorescent/light emitting layer, a sound insulation layer, an electrochromic layer, a photochromic layer, a thermochromic layer, a designability layer, and a high elastic modulus layer.

In one embodiment of the present invention, the functional layer is preferably a conductive layer.

The thickness of the conductive layer is preferably 1 to 30 $\mu$m, more preferably 2 to 15 $\mu$m, and particularly preferably 3 to 10 $\mu$m, from the viewpoint of electrical resistance, ease of production, etc. The thickness of the conductive layer can be measured with a thickness meter, a laser microscope, or the like.

The conductive layer preferably has a linear, grid-like or net-like shape from the viewpoint of electrical resistance, heat generation performance, electromagnetic wave absorbability, optical properties, and the like. Here, examples of the linear shape include straight, wavy and zigzag shapes. In one conductive layer, a single shape may exist, or multiple shapes may be mixed.

In one embodiment of the present invention, the conductive layer as the functional layer is preferably an antenna.

In an embodiment, for example, an embodiment in which a conductive layer is formed by a printing method and, for example, a laminate (laminated glass) in a region where ensuring of forward visibility is not important is partially heated or conductive layer is used as a sensor or an antenna, it is preferable that the conductive layer comprises multiple linear conductive materials with each line width of 0.001 to 5 mm from the viewpoint of ensuring a sufficient calorific value or ensuring functionality as a sensor or an antenna and ease of production. That is, the line width of the linear conductive material (wiring) constituting the linear, grid-like or net-like shape described above is preferably 0.001 to 5 mm. The line width is more preferably 0.01 to 2 mm, and particularly preferably 0.03 to 1 mm.

In another embodiment, for example, an embodiment in which a laminate is entirely heated, the conductive layer preferably comprises the multiple linear conductive materials with each line width of 1 to 30 $\mu$m from the viewpoint of more easily ensuring both a sufficient calorific value and good forward visibility. That is, the line width of the linear conductive material constituting the linear, grid-like or net-like shape described above is preferably 1 to 30 $\mu$m. The line width is more preferably 2 to 15 $\mu$m, and particularly preferably 3 to 12 $\mu$m.

The conductive material constituting the conductive layer preferably contains silver or copper, and is more preferably made of only silver or copper, from the viewpoint of ease of securing electrical resistance or a calorific value and ease of production. From an economical point of view, the conductive material constituting the conductive layer more preferably comprises copper, and more preferably made of only copper.

It is preferable that at least one surface of the conductive layer is subjected to low reflectance treatment, and it is more preferable that the entire surface of the conductive layer is subjected to low reflectance treatment In the present invention, the expression "being subjected to low reflectance treatment" means that treatment is performed so that a visible light reflectance measured according to JIS R 3106 is 30% or less. It is more preferable that the treatment is performed so that the visible light reflectance is 10% or less from the viewpoint of forward visibility. When the visible light reflectance is equal to or less than the above upper limit value, when a laminate is produced using a polyvinyl acetal resin film having a conductive layer as described later, a desired visible light reflectance can be more easily obtained, and the forward visibility tends to be excellent in a case where the laminate is used as a laminated glass for a vehicle.

Examples of the low reflectance treatment include blackening treatment (darkening treatment), browning treatment, and plating treatment. From the viewpoint of process passability, the low reflectance treatment is preferably blackening treatment Thus, from the viewpoint of good forward visibility, it is particularly preferable that one surface, both surfaces, or the entire surface of the conductive layer is blackened so that the visible light reflectance is 10% or less. Specifically, the blackening treatment can be performed using an alkaline blackening solution or the like.

<Method of producing polyvinyl acetal resin film having functional layer>

The method of producing a polyvinyl acetal resin film having a functional layer is not particularly limited. In one embodiment, preferably, the method comprises coating, printing or laminating a material constituting the functional layer on at least one surface of the polyvinyl acetal resin film.

The method of coating, printing or laminating the material constituting the functional layer is not particularly limited.

Examples of the method of coating include a method of coating the functional layer with a melt of a resin composition constituting the polyvinyl acetal resin film (for example, a method of melt-extruding the resin composition on the functional layer, or a method of coating the functional layer with the resin composition by knife coating or the like); a method of applying the functional layer to the polyvinyl acetal resin film by vapor deposition, sputtering or electric deposition; a method in which, in a case where the functional layer is composed of a resin composition, the resin composition constituting the polyvinyl acetal resin film and the resin composition constituting the functional layer are simultaneously extruded; and a method of dipping the polyvinyl acetal resin film in a solution of the resin composition constituting the functional layer.

Examples of the method of printing include screen printing, flexographic printing, and gravure printing. In the printing method, an ink is used which is dried or cured by heat or light before the polyvinyl acetal resin film having the functional layer is laminated.

Examples of the method of laminating (bonding together) include a method of layering a functional layer and a polyvinyl acetal resin film and thermocompression bonding the same; a method of applying a solvent, or a solution of a resin composition containing a resin constituting a polyvinyl acetal resin film and a solvent, on one or both of the functional layer and the polyvinyl acetal resin film or injecting the solvent or solution between the functional layer and the polyvinyl acetal resin film to bond the functional layer and the polyvinyl acetal resin film; and a method of bonding the functional layer and the polyvinyl acetal resin film with an adhesive. As the adhesive used in the method of bonding using the adhesive, an adhesive generally used in the technical field may be used, and examples thereof include acrylate-based adhesives, urethane-based adhesives, epoxy-based adhesives and hot melt adhesives. In an embodiment in which optically excellent characteristics are required, from the viewpoint that a haze derived from an adhesive does not occur, a method of bonding a functional layer and a polyvinyl acetal resin film without using an adhesive is preferable.

In an embodiment in which the functional layer is a conductive layer, the ink used in the printing method contains conductive particles and/or conductive fibers. The conductive particles or conductive fibers are not particularly limited. Examples thereof include metal particles (e.g. particles of gold, silver, copper, zinc, iron or aluminum); metal-coated particles or fibers (e.g. silver-plated glass fibers or glass spheres); conductive carbon black, carbon nanotubes, and particles or fibers of graphite or graphene. Furthermore, the conductive particles may be particles of a semiconductor, such as particles of conductive metal oxide, for example, particles of indium-doped tin oxide, indium-doped zinc oxide or antimony-doped tin oxide. From the viewpoint of conductivity, the ink preferably contains silver particles, copper particles and/or carbon nanotubes, and more preferably contains silver particles or copper particles. From an economical point of view, the ink particularly preferably contains copper particles.

In a preferred embodiment of the present invention, the conductive layer (conductive structure) is an etching structure of a metal foil. This embodiment is preferable from the viewpoint that production efficiency is high when the conductive structure is applied and the blackening treatment can be more easily performed. The step of bonding the metal foil and the polyvinyl acetal resin film can be performed, for example, by any of the following methods (I) to (III);

(I) a method of layering the polyvinyl acetal resin film and the metal foil and thermocompression bonding the same;
(II) a method of coating the metal foil with a melt of a resin composition constituting the polyvinyl acetal resin film and bonding the same, for example, a method of melt-extruding the resin composition on the metal foil, or a method of coating the metal foil with the resin composition by knife coating or the like; and
(III) a method of applying a solvent, or a solution or dispersion of a resin composition containing a resin constituting a polyvinyl acetal resin film and a solvent on one or both of the metal foil and the polyvinyl acetal resin film or injecting the solvent, solution or dispersion between the metal foil and the polyvinyl acetal resin film to bond the metal foil and the polyvinyl acetal resin film.

Although the bonding temperature during thermocompression bonding between the metal foil and the polyvinyl acetal resin film in the method (I) depends on the type of the resin constituting the polyvinyl acetal resin film, the bonding temperature is usually 90 to 170°C, preferably 100 to 160°C, more preferably 105 to 155°C, and still more preferably 105 to 150°C. When the bonding temperature is within the above range, good bonding strength can be more easily obtained.

The resin temperature during extrusion in the above method (II) is preferably 150 to 250°C and more preferably 170 to 230°C, from the viewpoint of reducing the content of volatile substances in the polyvinyl acetal resin film.

As the solvent in the above method (III), it is preferable to use a plasticizer usually used for polyvinyl acetal resin. As such a plasticizer, those described in the above section <Plasticizer> can be used.

The step of forming a desired shape of the conductive layer from the obtained polyvinyl acetal resin film with metal foil can be performed by using a known photolithography technique. The step can be performed, for example as mentioned in the Examples described later, by firstly laminating a dry film resist on the metal foil of the polyvinyl acetal resin film with metal foil, forming an etching resistance pattern using a photolithography method, subsequently immersing the polyvinyl acetal resin film to which the etching resistance pattern is provided in a copper etching solution to form the shape of the conductive layer, and then removing a remaining photoresist layer with a well-known method.

In one embodiment, at least one surface of the conductive layer is subjected to low reflectance treatment Such an embodiment is achieved, for example, by using a metal foil whose at least one surface is subjected to low reflectance treatment. In addition, the low reflectance treatment may be performed after the shape of the conductive layer is formed by the above-mentioned photolithography method. The low reflectance treatment of the metal foil and the conductive layer can be performed using an alkaline blackening solution or the like as described above.

The conductive material forming the conductive layer preferably contains silver or copper, and is more preferably made of only silver or copper, from the viewpoint of ease of securing electrical resistance or a calorific value and ease of production. From an economical point of view, the conductive material forming the conductive layer more preferably contains copper, and is more preferably made of only copper.

<Laminate>

The present invention also relates to a laminate having the above polyvinyl acetal resin film with the functional layer between multiple transparent substrates. The present invention also relates to a laminate further having a plasticized polyvinyl acetal resin layer between multiple transparent substrates, that is, a laminate having the above polyvinyl acetal resin film with the functional layer and the plasticized polyvinyl acetal resin layer between the multiple transparent substrates.

In an embodiment in which the functional layer is a conductive layer, each wiring of the conductive layer in the laminate is connected to a bus bar. As the bus bar, a bus bar generally used in the technical field is used, and examples thereof include a metal foil tape, a metal foil tape with a conductive adhesive, and a conductive paste. The bus bar(s) may be formed by printing the bus bar(s) or leaving a portion of the metal foil as the bus bar(s) at the same time as forming the conductive layer. A power feeder is connected to the bus bar or each of the bus bars and is connected to a power supply, and thereby current is supplied to the conductive layer.

From the viewpoint of transparency, weather resistance, and mechanical strength, the transparent substrate is preferably inorganic glass (hereinafter referred to simply as glass), or organic glass such as a methacrylic resin sheet, a polycarbonate resin sheet, a polystyrene-based resin sheet, a polyester-based resin sheet or a polycycloolefin-based resin sheet, more preferably inorganic glass, a methacrylic resin sheet or a polycarbonate resin sheet, and particularly preferably inorganic glass. The inorganic glass is not particularly limited, and examples thereof include float glass, tempered glass, semi-tempered glass, chemically tempered glass, green glass, and quartz glass. Therefore, in a preferred embodiment of the present invention, the transparent substrate is glass.

In a case where the laminate has the conductive layer as the functional layer, the conductive layer may be in contact with the transparent substrate, or may be in contact with the plasticized polyvinyl acetal resin layer in a case where the plasticized polyvinyl acetal resin layer is laminated, or may be in contact with other functional layer.

In a case where the transparent substrate is a glass, if the conductive layer is in direct contact with the glass, moisture may intrude to cause corrosion of the bus bar and/or the conductive layer due to insufficient sealing of the bus bar and/or the conductive layer, or air may be left during production of the laminate which may result in residual air bubbles or cause delamination. Therefore, it is preferable that the conductive layer is not in direct contact with the glass.

Particularly in a vehicle glass, especially a vehicle windshield, in the case of using the polyvinyl acetal resin film of the present invention, from the viewpoint of forward visibility, it is preferable that the conductive layer is arranged so that the surface treated to have low reflectance of the conductive layer is on the side of persons on board.

In a case where the laminate has the conductive layer as the functional layer, moisture may enter from an edge of the laminate and cause corrosion of the conductive layer. Therefore, the conductive layer is preferably arranged at least 1 cm inward from the edge of the laminate.

Although the laminate according to the present invention can have the following layer configurations, the layer configuration is not limited thereto.

(1) four-layer structure consisting of transparent substrate A/polyvinyl acetal resin film/functional layer A/transparent substrate B,
(2) five-layer structure consisting of transparent substrate A/polyvinyl acetal resin film/functional layer A/functional layer B/transparent substrate B,

(3) five-layer structure consisting of transparent substrate A/functional layer B/polyvinyl acetal resin film/functional layer A/transparent substrate B,

(4) five-layer structure consisting of transparent substrate A/polyvinyl acetal resin film/functional layer A/plasticized polyvinyl acetal resin layer/transparent substrate B,

(5) five-layer structure consisting of transparent substrate A/plasticized polyvinyl acetal resin layer/polyvinyl acetal resin film/functional layer A/transparent substrate B,

(6) six-layer structure consisting of transparent substrate A/plasticized polyvinyl acetal resin layer/polyvinyl acetal resin film/functional layer A/plasticized polyvinyl acetal resin layer/transparent substrate B,

(7) six-layer structure consisting of transparent substrate A/functional layer B/polyvinyl acetal resin film/functional layer A/plasticized polyvinyl acetal resin layer/transparent substrate B,

(8) six-layer structure consisting of transparent substrate A/polyvinyl acetal resin film/functional layer A/functional layer B/plasticized polyvinyl acetal resin layer/transparent substrate B,

(9) six-layer structure consisting of transparent substrate A/polyvinyl acetal resin film/functional layer A/plasticized polyvinyl acetal resin layer/functional layer B/transparent substrate B,

(10) six-layer structure consisting of transparent substrate A/functional layer B/plasticized polyvinyl acetal resin layer/polyvinyl acetal resin film/functional layer A/transparent substrate B,

(11) seven-layer structure consisting of transparent substrate A/plasticized polyvinyl acetal resin layer/polyvinyl acetal resin film/functional layer A/functional layer B/plasticized polyvinyl acetal resin layer/transparent substrate B,

(12) seven-layer structure consisting of transparent substrate A/functional layer B/plasticized polyvinyl acetal resin layer/polyvinyl acetal resin film/functional layer A/plasticized polyvinyl acetal resin layer/transparent substrate B,

(13) seven-layer structure consisting of transparent substrate A/plasticized polyvinyl acetal resin layer/functional layer B/polyvinyl acetal resin film/functional layer A/plasticized polyvinyl acetal resin layer/transparent substrate B.

In a case where mainly heating a transparent substrate outside a vehicle is required, for example in a case where melting snow deposited on the transparent substrate is required, it is preferable that the polyvinyl acetal resin film is in contact with the transparent substrate outside the vehicle and the conductive layer is present. That is, it is preferable that, for example, in the layer structure (4), assuming that the transparent substrate A is an outside transparent substrate and the transparent substrate B is an inside transparent substrate, the functional layer A is a conductive layer.

In a case where main heating a transparent substrate inside a vehicle is required, for example in a case where removal of haze in the vehicle is required, it is preferable that the polyvinyl acetal resin film is in contact with the transparent substrate inside the vehicle and the conductive layer is present That is, it is preferable that, in the layer structure (4), for example, assuming that the transparent substrate A is an inside transparent substrate and the transparent substrate B is an outside transparent substrate, the functional layer A is a conductive layer.

<Plasticized polyvinyl acetal resin layer>

The laminate may have one or more plasticized polyvinyl acetal resin layers in addition to the polyvinyl acetal resin film Such a plasticized polyvinyl acetal resin layer is not particularly limited, and a commonly used plasticized polyvinyl acetal resin layer containing a polyvinyl acetal resin and a plasticizer can be used. The polyvinyl acetal resin may be, for example, the polyvinyl acetal resin described in the above section <Resin constituting polyvinyl acetal resin film>, and can be produced by the same method as the method described in the same section.

In an initial state before laminating layers, the content of the plasticizer in the plasticized polyvinyl acetal resin layer is preferably 19 parts by mass or more, more preferably 19 to 56 parts by mass, still more preferably 28 to 47 parts by mass, and particularly preferably 35 to 43 parts by mass based on 100 parts by mass of the resin in the resin composition constituting the plasticized polyvinyl acetal resin layer. When the content of the plasticizer is within the above range, a laminate having excellent impact resistance can be more easily obtained. A plasticized polyvinyl acetal resin layer having a sound insulation function can also be used as the plasticized polyvinyl acetal resin layer. In this case, in the initial state before laminating layers, the content of the plasticizer is preferably 42 parts by mass or more, more preferably 42 to 100 parts by mass, still more preferably 45 to 67 parts by mass, and particularly preferably 47 to 54 parts by mass based on 100 parts by mass of the resin in the resin composition constituting the plasticized polyvinyl acetal resin layer.

As the plasticizer, the plasticizer described in the above section <Plasticizer> may be used.

The plasticized polyvinyl acetal resin layer may contain the additives described in the above section <Additives>, if necessary.

The plasticized polyvinyl acetal resin layer can be produced by the method described in the above section <Method of producing polyvinyl acetal resin film>.

The thickness of the plasticized polyvinyl acetal resin layer is preferably 100 to 1600 $\mu$m, more preferably 350 to 1200 $\mu$m, and still more preferably 700 to 900 $\mu$m. When the thickness of the plasticized polyvinyl acetal resin layer is within the above range, excellent penetration resistance can be more easily obtained. The thickness can be measured with a thickness meter, a laser microscope, or the like.

In a case where the laminate has the plasticized polyvinyl acetal resin layer, a difference between the amount of the vinyl alcohol units of the polyvinyl acetal resin constituting the polyvinyl acetal resin film and the amount of the vinyl alcohol units of the polyvinyl acetal resin constituting the plasticized polyvinyl acetal resin layer is preferably 5 mol% or less, more preferably 3 mol% or less, and particularly preferably 1 mol% or less. In a case where the polyvinyl acetal resin constituting the polyvinyl acetal resin film or the polyvinyl acetal resin constituting the plasticized polyvinyl acetal resin layer is constituted of a mixture of multiple resins, the average amount of the vinyl alcohol units of the polyvinyl acetal resins constituting the polyvinyl acetal resin layer and the average amount of the vinyl alcohol units of the polyvinyl acetal resins constituting the plasticized polyvinyl acetal resin layer preferably satisfy the above relationship. When the difference is equal to or less than the above upper limit value, a difference in refractive index between the polyvinyl acetal resin film and the plasticized polyvinyl acetal resin layer can be reduced in an equilibrium state after transfer of the plasticizer in the laminate. Therefore, in a case where the plasticized polyvinyl acetal resin layer and the polyvinyl acetal resin film which have different dimensions are used, the boundary is less visible, and thus it is preferable.

On the other hand, it is possible to obtain a laminate having excellent sound insulation performance by differentiating the amount of the vinyl alcohol units of the polyvinyl acetal resin constituting the polyvinyl acetal resin film from the amount of the vinyl alcohol units of the polyvinyl acetal resin constituting the plasticized polyvinyl acetal resin layer, and thereby differentiating the amount of the plasticizer in the polyvinyl acetal resin film from the amount of the plasticizer in the plasticized polyvinyl acetal resin layer in the equilibrium state after transfer of the plasticizer. In this case, the difference in the amount of the vinyl alcohol units is preferably 5 mol% or more and more preferably 8 mol% or more.

The plasticized polyvinyl acetal resin layer may be a commercially available plasticized polyvinyl butyral sheet, and may be a plasticized polyvinyl acetal resin layer in which infrared absorbing or reflecting nanoparticles are dispersed, a colored plasticized polyvinyl acetal resin layer, or a plasticized polyvinyl acetal resin layer having a sound insulation function.

<Method of producing laminate>

The laminate can be produced by methods known to a person skilled in the art. For example, a laminate can be produced by the following method. On the transparent substrate, any number of the polyvinyl acetal resin film having the functional layer and optionally any number of the plasticized polyvinyl acetal resin layer are arranged in any order, and another transparent substrate is arranged thereon The temperature of the obtained material is raised as a pre-thermocompression step, and thereby, the polyvinyl acetal resin film and optionally the plasticized polyvinyl acetal resin layer are entirely or locally bonded to the transparent substrates through thermal fusion. Then, the bonded product is treated with an autoclave to obtain a laminate.

Alternatively, a laminate can be produced by previously pre-adhering the polyvinyl acetal resin film having a functional layer and optionally the plasticized polyvinyl acetal resin layer and/or another functional layer, arranging the pre-adhered material between two transparent substrates, and then bonding them through thermal fusion at high temperature.

Examples of the above pre-thermocompression step include, from the viewpoint of removing excess air or carrying out light bonding between adjacent layers, a method of degassing under reduced pressure by a method such as a vacuum bag, a vacuum ring, or a vacuum laminator, a method of degassing using a nip roll, and a method of compression molding under high temperature conditions. For example, the vacuum bag method or vacuum ring method described in EP 1235683 B1 can be performed, for example, at about $2 \times 10^4$ Pa and 130 to 145°C. The vacuum laminator comprises a heatable and vacuumable chamber, and a laminate is formed for about 20 minutes to about 60 minutes in the chamber. Usually, a reduced pressure of 1 Pa to $3 \times 10^4$ Pa and a temperature of 100°C to 200°C, particularly 130°C to 160°C, are effective. In a case where the vacuum laminator is used, depending on the temperature and pressure, treatment with an autoclave may not be performed.

The treatment with an autoclave is carried out, for example, at a pressure of about $1 \times 10^6$ Pa to about $1.5 \times 10^6$ Pa and a temperature of about 100°C to about 145°C for about 20 minutes to 2 hours.

A method of arranging, on a first transparent substrate, the polyvinyl acetal resin film having the functional layer, optionally the plasticized polyvinyl acetal resin layer, and optionally another functional layer is not particularly limited, and various methods can be applied. For example, the polyvinyl acetal resin film having the functional layer, optionally the plasticized polyvinyl acetal resin layer, and optionally another functional layer may be supplied from each roll having a proper width, and may be cut to a desired size to arrange, or the film previously cut to a desired size may be arranged. For example, in a case of an automobile windshield, the polyvinyl acetal resin film having a conductive layer, optionally the plasticized polyvinyl acetal resin layer and optionally another functional layer which are supplied from each of their rolls may be heated/drawn, cut, and processed into a fan shape to be used.

In the fields of automobiles, in particular when a windshield is produced, the top of the glass may have a so-called color shade region. Thus, the polyvinyl acetal resin film and/or, if laminated, the plasticized polyvinyl acetal resin layer may be coextruded together with a properly colored polymer melt, or at least one of the polyvinyl acetal resin film and the plasticized polyvinyl acetal resin layer may have a partially different coloration characteristic. Thus, the polyvinyl acetal resin film and/or the plasticized polyvinyl acetal resin layer if laminated may have a color gradation adapted to the shape of the windshield.

In a case where the plasticized polyvinyl acetal resin layer is laminated, the plasticized polyvinyl acetal resin layer may have a wedge-shaped thickness profile. At this time, the laminate can have the wedge-shaped thickness profile even when the thickness profile of the polyvinyl acetal resin film is a parallel plane, and the laminate can be used for a head-up display (HUD) in the automobile windshield.

The laminate of the present invention can be used as laminated glass used for a building or vehicle. Therefore, the present invention also relates to a laminate which is a laminated glass for a vehicle. The laminated glass for a vehicle means a windshield, a rear glass, a roof glass, a side glass or the like for a vehicle such as a train, a tram, an automobile, a ship and an aircraft.

When a laminate produced using the polyvinyl acetal resin film of the present invention and a conductive layer whose at least one surface has been subjected to low reflectance treatment (e.g. blackening treatment) as a functional layer is irradiated with light on the surface treated to have low reflectance (e.g. blackened surface) side, the haze is usually 2.0 or less, preferably 1.8 or less, and more preferably 1.5 or less. When light is applied on a metallic luster surface side of the laminate produced using the polyvinyl acetal resin film of the present invention and the conductive layer as a functional layer, the haze is usually 3.0 or less, preferably 2.8 or less, and more preferably 2.5 or less. The haze can be measured according to JIS R 3106. The haze can be adjusted to equal to or less than the above upper limit value by using the polyvinyl acetal resin film of the present invention having the specific average surface roughness Rz, birefringence $\Delta n$, and average thickness and reducing the linear width of the conductive layer.

EXAMPLES

The present invention is hereunder described in more detail with reference to the Examples, but it should be construed that the present invention is by no means restricted by these Examples. Evaluations in Examples and Comparative Examples were performed by the following methods.

<Measurement of peak top molecular weight and molecular weight distribution of resin constituting polyvinyl acetal resin film>

The resin constituting the polyvinyl acetal resin film was analyzed by gel permeation chromatography (GPC). For the GPC analysis, GPCmax TDA 305 manufactured by Viscotek Corporation and a RI detector were used as analyzers; a column obtained by connecting two GPC KF-806L manufactured by Shodex and further connecting KF-G manufactured by Shodex as a guard column on the end of the connected two columns was used as a column; a THF solvent and standard polystyrene (Easical GPC/SEC Calibration Standards PS-1 manufactured by Agilent Technologies, Inc.) were used; and OmniSE, C4.7 was used as analysis software. Measurement was carried out at 40°C and an injection amount of 100 $\mu$L to determine the peak top molecular weight and molecular weight distribution of the resin.

<Average surface roughness Rz>

According to JIS B0601-1994, for each of the polyvinyl acetal resin film surface (hereinafter also referred to as "surface 1") on a roll A side described later and the polyvinyl acetal resin film surface (hereinafter also referred to as "surface 2") on a roll B side, the average surface roughness Rz was measured.

<Measurement of birefringence $\Delta n$>

Information on the birefringence $\Delta n$ of the polyvinyl acetal resin film was obtained using a birefringence/retardation evaluation system (WPA-100 manufactured by Photonic Lattice, Inc.). In this evaluation system, retardation could be measured as two-dimensional surface distribution data, and this retardation was used as an index for grasping stress inside the polyvinyl acetal resin film. Specifically, a baseline was obtained by measuring a polarization state of a light source, and a sample film cut into a size of 50 mm × 50 mm from each of the polyvinyl acetal resin films obtained in Examples and Comparative Examples was placed at a measurement position to measure retardation Rd of the sample film. An average value of Rd in a measurement plane was divided by an average thickness of the sample film to calculate the birefringence $\Delta n$.

<Measurement of shrinkage rate of polyvinyl acetal resin film when heated at 110°C for 30 minutes>

The polyvinyl acetal resin film formed by extrusion was subjected to humidity adjusting treatment at 20°C and 30% RH for 2 days in a state where a dimensional change of the polyvinyl acetal resin film was not suppressed (such as being placed on a net shelf as it was). Then, an about 20 cm square sample film was cut out so that the two sides are parallel to the flow direction (MD direction) and the remaining two sides are parallel to the width direction (TD direction) from a central portion of the polyvinyl acetal resin film, and the length in the MD direction and the length in the TD direction of the cut out sample film were measured in units of 0.1 cm. After that, the sample film was placed on a Teflon (registered trademark) sheet without being fixed, and put into a hot air dryer set at 110°C for 30 minutes. The length in the MD direction and the length in the TD direction of the sample film taken out from the dryer were measured in units of 0.1 cm, and the shrinkage rate in the MD direction and the shrinkage rate in the TD direction were calculated using the following formula.

$$\text{Shrinkage rate (\%)} = \{(\text{length before heat treatment} - \text{length after heat treatment})/\text{length before heat treatment}\} \times 100$$

<Evaluation of appearance of electrically conductive structure>

The state of the conductive layer (electrically conductive structure) after photolithography and after autoclaving described later was visually observed using a loupe, and the presence or absence of deformation and disconnection of wiring was evaluated based on the following criteria.

A    Deformation and disconnection were not observed.

B    Partial deformation was observed but no disconnection was observed.

C    Disconnection was remarkable.

[Example 1]

A polyvinyl butyral resin 1 (hereinafter referred to as "resin 1") and a polyvinyl butyral resin 2 (hereinafter referred to as "resin 2") having physical properties shown in Table 1 were blended at a mass ratio of 75 : 25, melt-kneaded to be extruded into strands, and pelletized. The obtained pellets were melt-extruded at 230°C using a single screw extruder and a T-die. A metal elastic roll (roll A) and a hard rubber roll (roll B) were used as cooling rolls, and a polyvinyl acetal resin film (a) having an average thickness of 50 μm and having a particularly smooth surface (surface 1) on the metal elastic roll side was obtained. Fig. 1 shows a schematic view of an apparatus used for forming the polyvinyl acetal resin film (a). The temperature of the polyvinyl acetal resin film (a) at the detaching point (see Fig. 1) from the roll B was measured using an infrared radiation thermometer, and the temperature of a T-die and the temperatures of the cooling rolls A and B were adjusted so that the temperature of the polyvinyl acetal resin film (a) at the detaching point was 85°C. The temperature of the film was reduced from 85°C to 80°C or less between the cooling roll B and the roll C, and the speed ratio between the roll B and the winding roll was set to 0.01. The speed ratio between the roll B and the winding roll was calculated according to the following formula.

$$\text{Speed ratio (-)} = \{\text{speed (m/min) of roll B} - \text{speed (m/min) of winding roll}\}/\text{speed (m/min) of roll B}$$

The average surface roughness Rz and the birefringence Δn of the obtained polyvinyl acetal resin film (a) and the shrinkage rate of the polyvinyl acetal resin film (a) when heated at 110°C for 30 minutes were determined. The results and GPC analysis results of the resins used are summarized in Table 2.

[Table 1]

| Resin | Amount of vinyl alcohol units (mol%) | Acetalization degree (mol%) | Amount of vinyl acetate units (mol%) | Viscosity of toluene/ethanol=1/1 solution with concentration of 10% by mass (mPa·s) |
|---|---|---|---|---|
| 1 | 28.5 | 70.8 | 0.7 | 152 |
| 2 | 28.9 | 70.4 | 0.7 | 1410 |

<Production of polyvinyl acetal resin film with copper foil bonded>

A 7 µm thick copper foil whose one surface was blackened was layered on the produced polyvinyl acetal resin film (a) in such an orientation that the blackened surface and the surface 1 of the polyvinyl acetal resin film (a) were in contact with each other. Next, the upper and lower sides of the layered product were sandwiched between 50 µm thick PET films, and the sandwiched product was passed between thermocompression bonding rolls set at 110°C (pressure: 0.2 MPa, speed: 0.5 m/min). Then, the PET films were peeled off to obtain the polyvinyl acetal resin film (a) to which the copper foil was bonded.

<Production of polyvinyl acetal resin film having conductive layer>

After a dry film resist was laminated on the copper foil of the produced polyvinyl acetal resin film (a) to which the copper foil was bonded, an etching resistance pattern was formed using a photolithography method. Next, the polyvinyl acetal resin film (a) to which the copper foil was bonded and on which the etching resistance pattern was formed was immersed in a copper etching solution to form an electrically conductive structure, and then a remaining photoresist layer was removed by a conventional method. Thus, the polyvinyl acetal resin film (a) having the conductive layer was obtained This polyvinyl acetal resin film (a) having the conductive layer does not have an adhesive layer between the polyvinyl acetal resin film (a) and the electrically conductive structure (conductive layer). The electrically conductive structure had a copper mesh structure in which copper wires with each line width of 10 µm were arranged in a grid at intervals of 500 µm in a square of 5 cm × 5 cm, and had the structure in which each of the upper and lower sides was connected to each of copper wire structures with a wire width of 5 mm corresponding to bus bars respectively, and could function as a conductive structure. With respect to the obtained polyvinyl acetal resin film (a) having the conductive layer, the appearance of the electrically conductive structure was evaluated The results are shown in Table 2.

<Production of laminate>

The obtained polyvinyl acetal resin film having the electrically conductive structure was cut into a length of 5 cm and a width of 5 cm, and arranged on a glass with a length of 10 cm, a width of 10 cm and a thickness of 3 mm. At this time, the film was arranged in an orientation in which a surface of the film having no electrically conductive structure was in contact with the glass and in a location in which the electrically conductive structure was located near the center of the glass. Next, an electrode (a copper foil tape with a conductive adhesive) was applied to each of bus bars (5 mm wide copper wires) located at both ends of the electrically conductive structure so that each electrode end protruded out of the glass. In addition, a plasticized polyvinyl acetal resin layer with a length of 10 cm, a width of 10 cm, and a thickness of 0.76 mm (containing 39 parts by mass of 3GO as a plasticizer with respect to 100 parts by mass of a polyvinyl butyral resin having a vinyl alcohol unit amount of 29 mol% and a viscosity average polymerization degree of 1700) and a glass with a length of 10 cm, a width of 10 cm and a thickness of 3 mm were layered and arranged thereon.
Subsequently, this layered product was placed in a vacuum bag and decompressed at room temperature for 15 minutes using a vacuum pump. Then, the temperature was raised to 100°C while decompressing, and heating was continued as it was for 60 minutes. After the temperature was lowered, the pressure was returned to normal pressure, and a laminate after prelamination was taken out. Thereafter, the laminate was put into an autoclave and treated at 140°C and 1.2 MPa for 30 minutes to produce a laminate. The appearance of the electrically conductive structure of the obtained laminate was evaluated The results are shown in Table 2.

[Example 2]

A polyvinyl acetal resin film (b) was produced and a laminate was produced and evaluated in the same manner as in Example 1 except that the mixing ratio of the resin 1 and the resin 2 was changed to the ratio shown in Table 2.

[Example 3]

A polyvinyl acetal resin film (c) was produced and a laminate was produced and evaluated in the same manner as in Example 2 except that a metal elastic roll was used instead of the hard rubber roll, that is, the metal elastic rolls were used as the rolls A and B.

[Example 4]

A polyvinyl acetal resin film (d) was produced and a laminate was produced and evaluated in the same manner as in Example 3 except that the average thickness of the film was changed to 180 µm.

[Comparative Example 1]

A polyvinyl acetal resin film (e) was produced and a laminate was produced and evaluated in the same manner as in Example 2 except that the metal elastic roll of the roll A was changed to a hard rubber roll, the film temperature at the detaching point from the roll B was changed from 85°C to 70°C, and the speed ratio between the roll B and the winding roll was changed from 0.01 to 0.10.

[Comparative Example 2]

A polyvinyl acetal resin film (f) was produced and a laminate was produced and evaluated in the same manner as in Comparative Example 1 except that the average thickness of the film was changed to 75 $\mu$m, the film temperature at the detaching point from the roll B was changed from 70°C to 75°C, and the speed ratio between the roll B and the winding roll was changed from 0.10 to 0.20.

[Comparative Example 3]

A polyvinyl acetal resin film (g) was produced and a laminate was produced and evaluated in the same manner as in Example 2 except that the film temperature at the detaching point from the roll B was changed from 85°C to 60°C, and the speed ratio between the roll B and the winding roll was changed from 0.01 to -0.10.

[Comparative Example 4]

A polyvinyl acetal resin film (h) was produced and a laminate was produced and evaluated in the same manner as in Comparative Example 3 except that the film temperature at the detaching point from the roll B was changed from 60°C to 80°C, and the speed ratio between the roll B and the winding roll was changed from -0.10 to 0.37.

[Comparative Example 5]

A polyvinyl acetal resin film (i) was produced and a laminate was produced and evaluated in the same manner as in Comparative Example 4 except that the average thickness of the film was changed to 100 $\mu$m, and the speed ratio between the roll B and the winding roll was changed from 0.37 to 0.64.

[Table 2]

| | Polyvinyl acetate resin film | Resin 1: Resin 2 (mass ratio) | Viscosity (mPa·s) of toluene/ ethanol=1/1 solution with concentration of 10% by mass | GPC analysis of resin constituting film | | Average thickness (μm) of film | Roll material | | Film temperature (°C) at detaching point from roll B | Speed ratio (-) between roll B and winding roll | Average surface roughness Rz (μm) of film | | Birefringence Δn (× 10⁻⁴) of film | Shrinkage rate (%) of film when heated at 110°C for 30 minutes | | Appearance of conductive structure | |
|---|---|---|---|---|---|---|---|---|---|---|---|---|---|---|---|---|---|
| | | | | Peak top molecular weight | Molecular weight distribution | | Roll A | Roll B | | | surface 1 | surface 2 | | MD | TD | After photolithography | After autoclave |
| Example 1 | (a) | 75:25 | 245 | 129,000 | 2.9 | 50 | Metal | Hard rubber | 85 | 0.01 | 1.2 | 3.6 | 1.8 | 2.3 | 1.9 | A | A |
| Example 2 | (b) | 100:0 | 152 | 111,700 | 2.5 | 50 | Metal | Hard rubber | 85 | 0.01 | 1.2 | 3.6 | 0.8 | 3.8 | 2.7 | A | A |
| Example 3 | (c) | 100:0 | 152 | 111,700 | 2.5 | 50 | Metal | Metal | 85 | 0.01 | 1.2 | 1.3 | 0.8 | 32 | 12 | A | A |
| Example 4 | (d) | 100:0 | 152 | 111,700 | 2.5 | 180 | Metal | Metal | 85 | 0.01 | 0.1 | 0.1 | 1.0 | 2.8 | 1.2 | A | A |
| Comparative | (e) | 100:0 | 152 | 111,700 | 2.5 | 50 | Hard rubber | Hard rubber | 70 | 0.10 | 2.0 | 2.5 | 3.7 | 9.0 | 4.4 | B | B |
| Comparative Example 2 | (f) | 100:0 | 152 | 111,700 | 2.5 | 75 | Hard rubber | Hard rubber | 75 | 020 | 3.4 | 5.5 | 1.3 | 10.9 | 0.8 | B | B |
| Comparative Example 3 | (g) | 100:0 | 152 | 111,700 | 2.5 | 50 | Metal | Hard rubber | 60 | -0.10 | 0.4 | 3.1 | 12.5 | 19.1 | 12.9 | C | c |
| Comparative Example 4 | (h) | 100:0 | 152 | 111,700 | 2.5 | 75 | Metal | Hard rubber | 80 | 037 | 0.3 | 3.2 | 11.8 | 22.4 | 2.0 | C | c |
| Comparative Example 5 | (i) | 100:0 | 152 | 111,700 | 2.5 | 100 | Metal | Hard rubber | 80 | 0.64 | 0.6 | 2.5 | 10.6 | 19.7 | 2.0 | C | C |

As shown in Table 2, when the polyvinyl acetal resin film had an average surface roughness Rz of at least one surface of 3.0 $\mu$m or less, a birefringence $\Delta$n of 3.0 $\times$ 10$^{-4}$ or less, and an average thickness of 200 $\mu$m or less (Examples 1 to 4), the shrinkage rate of the polyvinyl acetal resin film obtained when the film was heated was small, and both after photolithography and after autoclaving, that is, both in the polyvinyl acetal resin film having a conductive layer and in the laminate, neither deformation nor disconnection of the electrically conductive structure was observed. On the other hand, when only the birefringence $\Delta$n of the polyvinyl acetal resin film did not satisfy the requirements in the present invention (Comparative Examples 1 and 3 to 5), and when only the average surface roughness Rz of the polyvinyl acetal resin film did not satisfy the requirements in the present invention (Comparative Example 2), at least one of the shrinkage rate in the MD direction and the shrinkage rate in the TD direction of the polyvinyl acetal resin film obtained when the film was heated was large, and both in the polyvinyl acetal resin film having a conductive layer and in the laminate, deformation or disconnection of the electrically conductive structure was observed

## Claims

1. A polyvinyl acetal resin film, having:

    an average surface roughness Rz of at least one surface of 3.0 $\mu$m or less;
    a birefringence $\Delta$n of 3.0 $\times$ 10$^{-4}$ or less; and
    an average thickness of 200 $\mu$m or less.

2. The polyvinyl acetal resin film according to claim 1, wherein a shrinkage rate in an MD direction is 7% or less when the polyvinyl acetal resin film is heated at 110°C for 30 minutes.

3. The polyvinyl acetal resin film according to claim 1 or 2, wherein a shrinkage rate in a TD direction is 4% or less when the polyvinyl acetal resin film is heated at 110°C for 30 minutes.

4. The polyvinyl acetal resin film according to claim 3, wherein both the shrinkage rate in the MD direction and the shrinkage rate in the TD direction are 4% or less when the polyvinyl acetal resin film is heated at 110°C for 30 minutes.

5. The polyvinyl acetal resin film according to any one of claims 1 to 4, wherein an amount of a plasticizer in the film is 0 to 20% by mass based on a total mass of a resin composition constituting the film.

6. The polyvinyl acetal resin film according to any one of claims 1 to 5, having a functional layer on at least one surface.

7. The polyvinyl acetal resin film according to claim 6, wherein the functional layer is a conductive layer.

8. The polyvinyl acetal resin film according to claim 7, wherein the conductive layer is an antenna.

9. The polyvinyl acetal resin film according to claim 7 or 8, wherein the conductive layer comprises multiple linear conductive materials with each line width of 0.001 to 5 mm.

10. The polyvinyl acetal resin film according to any one of claims 7 to 9, wherein the conductive layer comprises the multiple linear conductive materials with each line width of 1 to 30 $\mu$m.

11. The polyvinyl acetal resin film according to any one of claims 7 to 10, wherein a conductive material constituting the conductive layer contains silver or copper.

12. A laminate comprising the polyvinyl acetal resin film according to any one of claims 6 to 11 between multiple transparent substrates.

13. The laminate according to claim 12, further comprising a plasticized polyvinyl acetal resin layer between the multiple transparent substrates.

14. The laminate according to claim 12 or 13, wherein the transparent substrate is glass.

15. The laminate according to claim 14, which is a laminated glass for a vehicle.

**16.** A method of producing the polyvinyl acetal resin film according to any one of claims 1 to 5, comprising melt-extruding a resin composition constituting the film in a condition in which a speed ratio [(VI - V3)/V1] between a speed (V1) of a cooling roll that cools a film temperature from a temperature of more than 80°C to a temperature of 80°C or less and a speed (V3) of a winding roll, or, when the film temperature is reduced from a temperature of more than 80°C to a temperature of 80°C or less between rolls, a speed ratio [(V2 - V3)/V2] between a speed (V2) of a roll arranged immediately before the reduction and the speed (V3) of the winding roll is in a range of 0 or more and less than 0.1.

**17.** A method of producing the polyvinyl acetal resin film according to any one of claims 6 to 11, comprising coating, printing or laminating a material constituting the functional layer on at least one surface of the film.

[FIG. 1]

## INTERNATIONAL SEARCH REPORT

| International application No. |
|---|
| PCT/JP2019/016836 |

A. CLASSIFICATION OF SUBJECT MATTER
Int.Cl.　　　C08J5/18(2006.01)i, 　B29C48/88(2019.01)i, 　B32B15/082(2006.01)i,
　　　　　　　B32B17/10(2006.01)i, 　B32B27/30(2006.01)i
According to International Patent Classification (IPC) or to both national classification and IPC

B. FIELDS SEARCHED

Minimum documentation searched (classification system followed by classification symbols)
Int.Cl.　C08J5/18, 　B29C48/88, 　B32B15/082, 　B32B17/10, 　B32B27/30

| Documentation searched other than minimum documentation to the extent that such documents are included in the fields searched | |
|---|---|
| Published examined utility model applications of Japan | 1922–1996 |
| Published unexamined utility model applications of Japan | 1971–2019 |
| Registered utility model specifications of Japan | 1996–2019 |
| Published registered utility model applications of Japan | 1994–2019 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y<br>A | JP 2003-340851 A (EASTMAN KODAK COMPANY) 02 December 2003, paragraphs [0001]-[0002], [0014], [0017]-[0018], [0021], [0026]-[0027], [0037], [0044] & US 2003/0214715 A1, paragraphs [0002]-[0003], [0015], [0018], [0021], [0026]-[0027] & EP 1367083 A2 & CN 1459339 A | 1-6, 12-15<br>7-15<br>16-17 |
| Y<br>A | JP 2016-539905 A (KURARAY EUROPE GMBH) 22 December 2016, paragraphs [0001], [0008], [0012], [0016], [0019] & US 2016/0288459 A1, paragraphs [0003], [0009], [0013], [0018], [0021] & EP 2878443 A1 & CN 105722679 A | 7-15<br>1-6, 16-17 |
| A | JP 2013-224025 A (KURARAY CO., LTD.) 31 October 2013, paragraphs [0008]-[0075] (Family: none) | 1-17 |
| A | WO 2016/159210 A1 (SEKISUI CHEMICAL CO., LTD.) 06 October 2016, paragraphs [0001], [0011]-[0162] & US 2018/0086033 A1, paragraphs [0001], [0010]-[0183] & EP 3279168 A1 & CN 107428607 A | 1-17 |
| A | JP 2014-136796 A (KURARAY CO., LTD.) 28 July 2014, paragraphs [0009]-[0124] (Family: none) | 1-17 |

☐ Further documents are listed in the continuation of Box C.   ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 08 July 2019 (08.07.2019) | 16 July 2019 (16.07.2019) |

| Name and mailing address of the ISA/<br>Japan Patent Office<br>3-4-3, Kasumigaseki, Chiyoda-ku,<br>Tokyo 100-8915, Japan | Authorized officer<br><br>Telephone No. |
|---|---|

Form PCT/ISA/210 (second sheet) (January 2015)

**EP 3 783 052 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013056811 A
- JP 2013516043 A
- US 2016288459 A1
- EP 1527107 B1
- WO 2004063231 A1
- EP 1606325 A1
- WO 2003020776 A1
- EP 1235683 B1